# EUROPEAN PATENT APPLICATION

(11) **EP 4 036 848 A1**
(43) Date of publication of application: **03.08.2022**
(21) Application number: 19947368.7
(22) Date of filing: 27.09.2019
(51) Int. Cl.: G06T 7/00

(54) **INFORMATION PROCESSING DEVICE, INFORMATION PROCESSING METHOD, AND STORAGE MEDIUM**

(71) Applicant: NEC Corporation, 108-8001 Tokyo (JP)
(72) Inventor: HAYASE, Noriaki, Tokyo 108-8001 (JP); YANO, Tatsuya, Tokyo 108-8001 (JP); NONAKA, Tetsushi, Tokyo 108-8001 (JP); KUJIRAI, Hiroaki, Tokyo 108-8001 (JP)
(74) Representative: Betten & Resch
(86) International application number: PCT/JP2019/038178
(87) International publication number: WO 2021/059493

(57) **Abstract**

Provided is an information processing device including an acquisition unit configured to acquire a matching score group including a plurality of matching scores each indicating a matching degree between a first biological information and a second biological information acquired by matching the first biological information acquired from an image including at least a part of a matching target person and a plurality of the second biological information corresponding to a plurality of registrants, a determination unit configured to perform a determination based on a matching score in which a rank is a first rank and a matching score in which the rank is not a first rank in the matching score group and an output unit configured to output a management information based on a result of the determination.

## Description

### [Technical Field]

The some non-limiting embodiments relate to an information processing device, an information processing method, and a storage medium.

### [Background Art]

Patent Literature 1 discloses an information processing device that determines a user by face authentication. The information processing device captures a face image of the user, and calculates a score obtained by quantifying the matching degree between the captured face image and the face image of the registrant. When there is a registrant whose score is equal to or greater than the threshold value, the information processing device determines that the captured user is the registrant.

### [Citation List]

### [Patent Literature]

PTL 1: Japanese Patent Application Laid-open No. 2016-218672

### [Summary]

### [Technical Problem]

In biometric authentication as described in Patent Literature 1, it is required to maintain matching accuracy so as to sufficiently reduce the occurrence rate of erroneous determination. However, since the state of the biometric authentication system changes depending on the state of use or the like after introduction, it may be difficult to maintain the matching accuracy. Therefore, a method of appropriately managing the matching accuracy is required.

The some non-limiting embodiments intend to provide an information processing device, an information processing method, and a storage medium which can appropriately manage matching accuracy.

### [Solution to Problem]

According to one example aspect of the some non-limiting embodiments, provided is an information processing device including an acquisition unit configured to acquire a matching score group including a plurality of matching scores each indicating a matching degree between a first biological information and a second biological information acquired by matching the first biological information acquired from an image including at least a part of a matching target person and a plurality of the second biological information corresponding to a plurality of registrants, a determination unit configured to perform a determination based on a matching score in which a rank is a first rank and a matching score in which the rank is not a first rank in the matching score group and an output unit configured to output a management information based on a result of the determination.

According to another example aspect of the some non-limiting embodiments, provided is an information processing method including acquiring a matching score group including a plurality of matching scores each indicating a matching degree between a first biological information and a second biological information acquired by matching the first biological information acquired from an image including at least a part of a matching target person and a plurality of the second biological information corresponding to a plurality of registrants performing a determination based on a matching score in which a rank is a first rank and a matching score in which the rank is not a first rank in the matching score group and outputting a management information based on a result of the determination.

According to another example aspect of the some non-limiting embodiments, provided is a storage medium storing a program that causes a computer to perform acquiring a matching score group including a plurality of matching scores each indicating a matching degree between a first biological information and a second biological information acquired by matching the first biological information acquired from an image including at least a part of a matching target person and a plurality of the second biological information corresponding to a plurality of registrants, performing a determination based on a matching score in which a rank is a first rank and a matching score in which the rank is not a first rank in the matching score group and outputting a management information based on a result of the determination.

### [Advantageous Effects]

According to the some non-limiting embodiments, an information processing device, an information processing method, and a storage medium which can appropriately manage matching accuracy.

### [Brief Description of Drawings]

[Fig. 1]

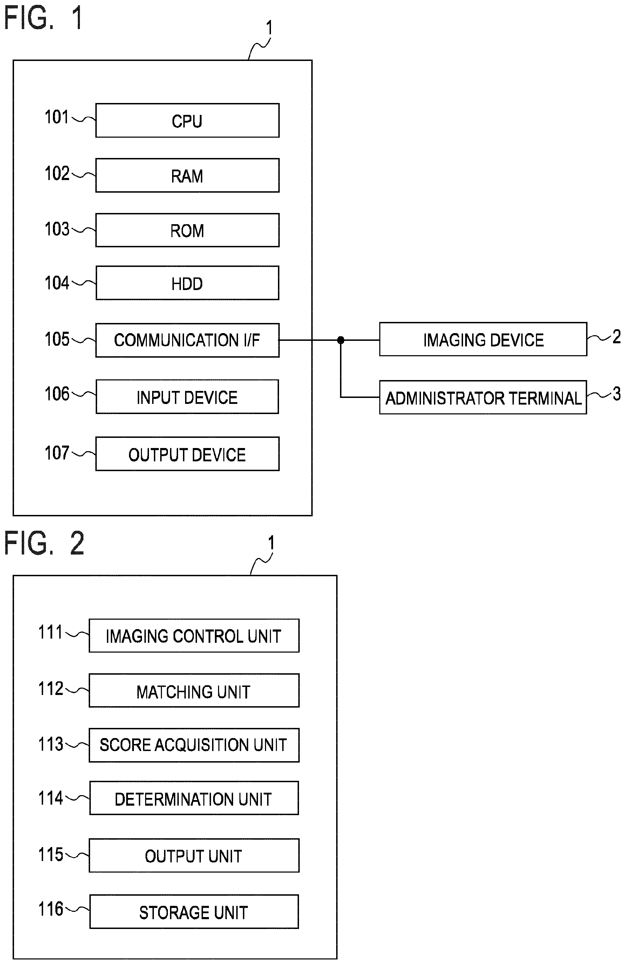

   Fig. 1 is a block diagram illustrating a hardware configuration of a biometric authentication system according to a first example embodiment.
[Fig. 2]
   Fig. 2 is a functional block diagram of an information processing device according to the first example embodiment.
[Fig. 3]

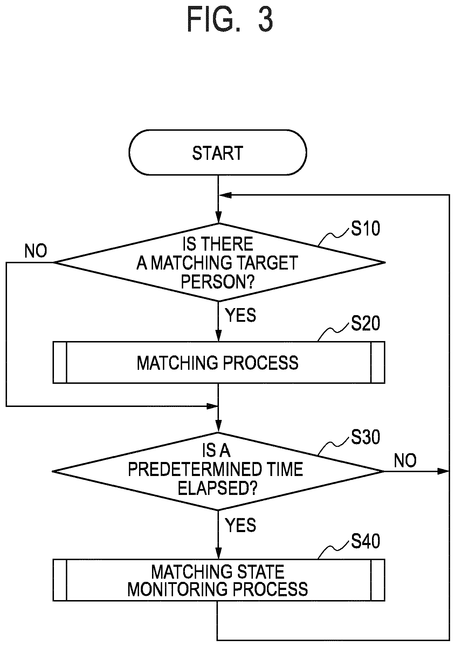

   Fig. 3 is a flowchart illustrating an outline of a process performed by the information processing device according to the first example embodiment.
[Fig. 4]

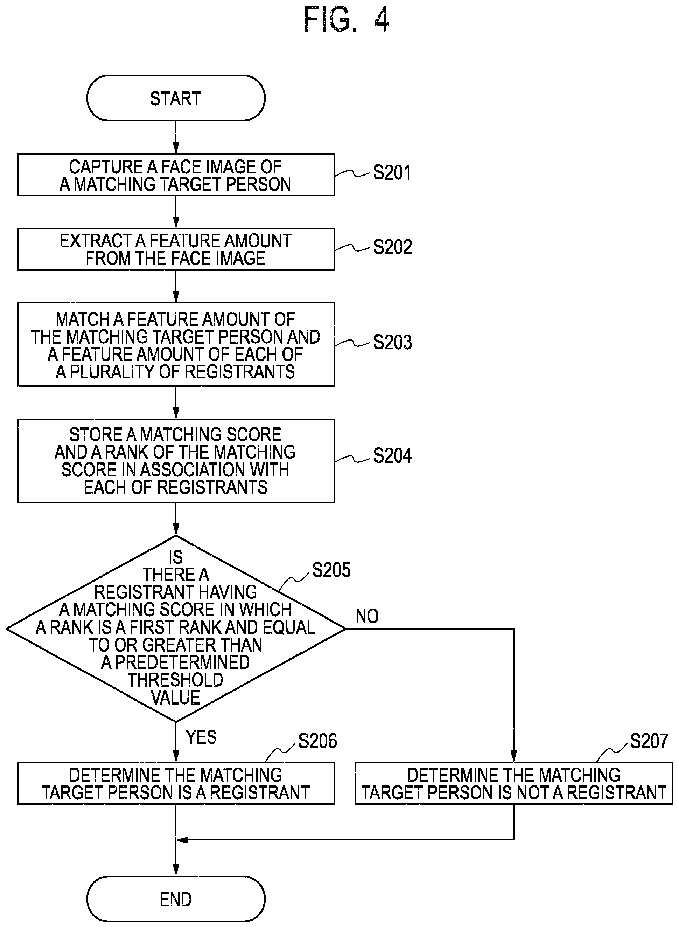

   Fig. 4 is a flowchart illustrating a matching process performed in the information processing device according to the first example embodiment.
[Fig. 5]

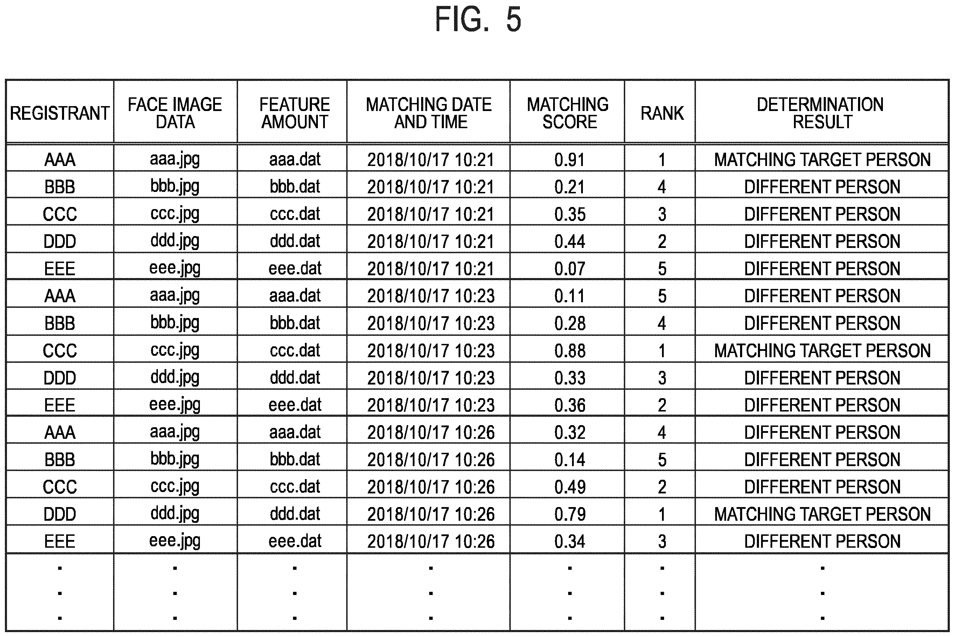

   Fig. 5 is a table illustrating an example of a matching result acquired by the information processing device according to the first example embodiment.
[Fig. 6]

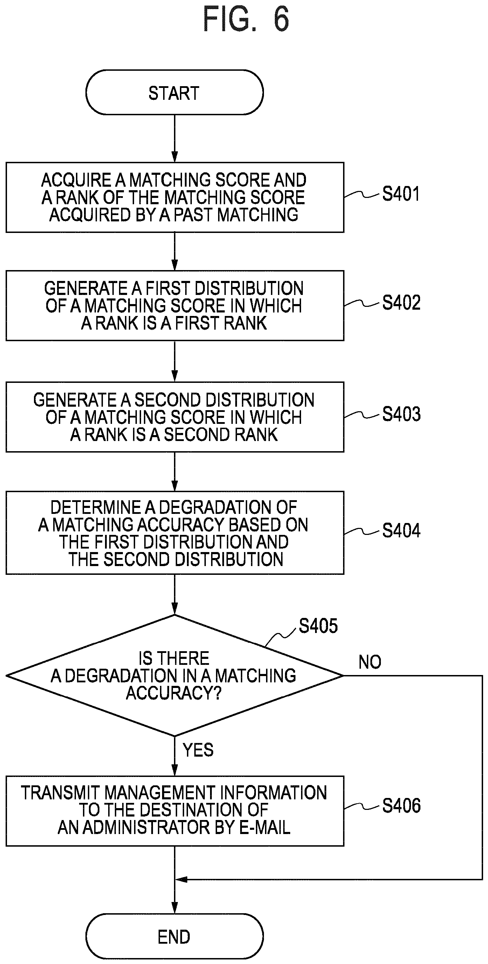

   Fig. 6 is a flowchart illustrating a matching state monitoring process performed in the information processing device according to the first example embodiment.
[Fig. 7]

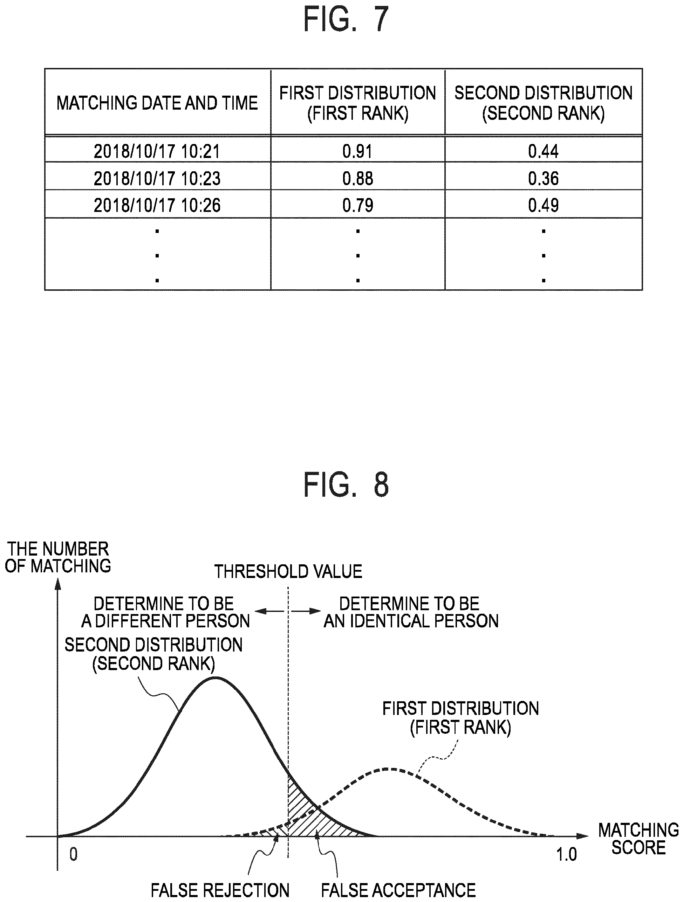

   Fig. 7 is a table illustrating an example of a distribution of matching scores acquired by the information processing device according to the first example embodiment.
[Fig. 8]
   Fig. 8 is an example of a graph illustrating a relationship between a distribution of matching scores and an erroneous determination.
[Fig. 9]

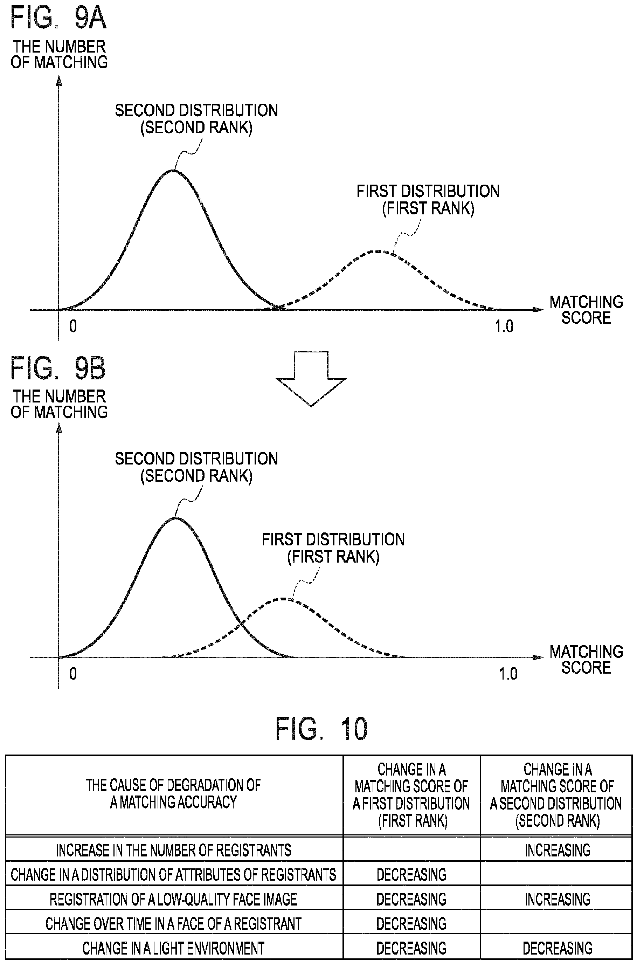

   Fig. 9 is an example of a graph illustrating a relationship between a variation in the distribution of the matching scores and the occurrence probability of the erroneous determination.
[Fig. 10]
   Fig. 10 is a table illustrating an example of a relationship between the cause of degradation of the matching accuracy and the tendency of the change in the matching score.
[Fig. 11]

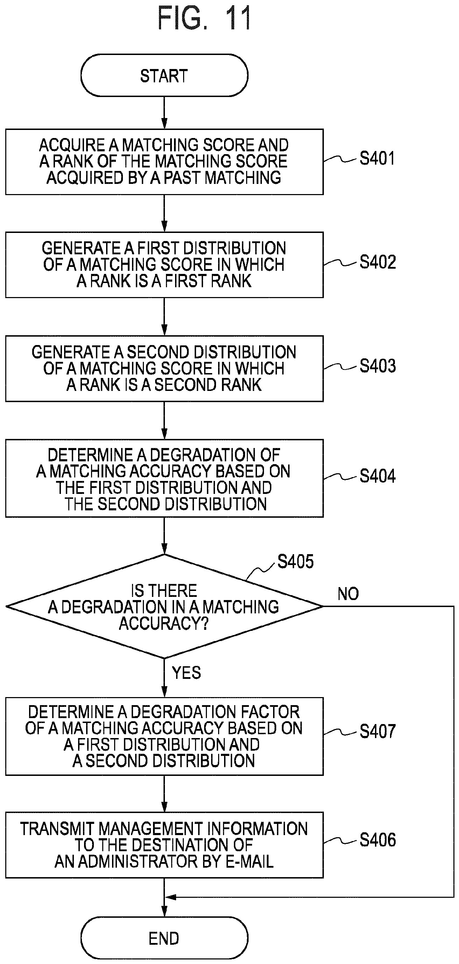

   Fig. 11 is a flowchart illustrating a matching state monitoring process performed in the information processing device according to a second example embodiment.
[Fig. 12]

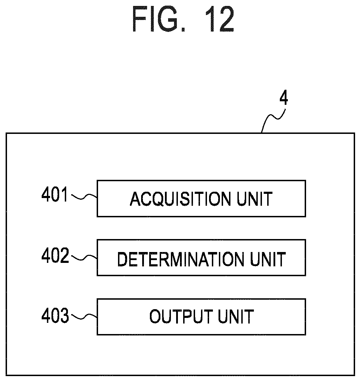

   Fig. 12 is a functional block diagram of an information processing device according to a third example embodiment.

### [Description of Embodiments]

Exemplary example embodiments of the some non-limiting embodiments will be described below with reference to the drawings. Throughout the drawings, the same components or corresponding components are labeled with same references, and the description thereof may be omitted or simplified.

### [First Example Embodiment]

A biometric authentication system according to the present example embodiment will be described. The biometric authentication system of the present example embodiment is a system for identifying a person by biometric authentication. The biometric authentication system of the present example embodiment may be used for, for example, management of entry/exit to/from a management area, management of entry/exit in an airport, a country boundary, or the like, management of login in a terminal, a server, or the like, and identification of a person in electronic payment, or the like. However, the biometric authentication system of the present example embodiment is not particularly limited as long as it can identify a person.

The biometric authentication method applicable to the biometric authentication system of the present example embodiment is typically face authentication. The face authentication may be performed by matching a feature amount obtained from a face image of a matching target person and a feature amount obtained from face images of a plurality of registrants to determine whether or not the matching target person is the same person as one of the registrants. However, the biometric authentication method may be another method using at least a part of the image of the matching target person, for example, an image such as a fingerprint, a palm print, a vein, or an iris. In the following description, the biometric authentication system according to the present example embodiment is assumed to be a face authentication system provided at a location where many matching target people sequentially visit, such as an entry/exit gate or the like.

In the present specification, an image of a feature part such as a face image of a matching target person or a feature amount obtained therefrom may be more generally referred to as first biological information. An image of a feature part such as a face image of a registrant or a feature amount obtained therefrom may be more generally referred to as second biological information.

Fig. 1 is a block diagram illustrating a hardware configuration of a biometric authentication system according to the present example embodiment. The biometric authentication system includes an information processing device 1, an imaging device 2, and an administrator terminal 3. The information processing device 1, the imaging device 2, and the administrator terminal 3 are connected by wire or wirelessly so as to be communicable via a network. The information processing device 1 is a computer that performs a matching process and a matching state monitoring process in the biometric authentication system. The imaging device 2 is a digital camera that captures a face image of a matching target person. The administrator terminal 3 is a computer used by an administrator who manages the biometric authentication system.

The general configuration of the biometric authentication system is merely an example, and the information processing device 1 and the imaging device 2 may be configured as an integrated device, for example. The biometric authentication system may further include another device such as an entry/exit gate that opens and closes based on the authentication result, a display device that notifies the matching target person of the authentication result, and a card reader that reads the identification card held by the matching target person.

The information processing device 1 includes a central processing unit (CPU) 101, a random access memory (RAM) 102, a read only memory (ROM) 103 and a hard disk drive (HDD) 104. The information processing device 1 also includes a communication interface (I/F) 105, an input device 106, and an output device 107. Each unit of the information processing device 1 is connected to each other via a bus, wiring, driving device, and the like (not illustrated).

In Fig. 1, each unit of the information processing device 1 is illustrated as an integrated device, but a part of these functions may be provided by an external device. For example, the input device 106 and the output device 107 may be external devices different from the portions constituting the functions of the computer including the CPU 101 and the like.

The CPU 101 is a processor that performs predetermined calculations in accordance with programs stored in the ROM 103, the HDD 104, and the like, and also has a function of controlling each unit of the information processing device 1. The RAM 102 is constituted by a volatile storage medium, and provides a temporary memory area necessary for the operation of the CPU 101. The ROM 103 is constituted by a non-volatile storage medium, and stores necessary information such as programs used for the operation of the information processing device 1. The HDD 104 is constituted by a non-volatile storage medium, and is a storage device for temporarily storing data transmitted and received to and from the imaging device 2, storing an operation program of the information processing device 1, and the like.

The communication I/F 105 is a communication interface based on a standard such as Ethernet (registered trademark) or Wi-Fi (registered trademark). The communication I/F 105 is a module for communicating with other devices such as the imaging device 2 and the administrator terminal 3.

The input device 106 is a keyboard, a pointing device, or the like, and is used by a user to operate the information processing device 1. Examples of the pointing device include a mouse, a trackball, a touch panel, and a pen tablet or the like.

The output device 107 is, for example, a display device. The display device is a liquid crystal display, an organic light emitting diode (OLED) display, or the like, and is used to display information, a graphical user interface (GUI) for operation input, or the like. The input device 106 and the output device 107 may be integrally formed as a touch panel.

Note that the hardware configuration of the information processing device 1 is an example, and other devices may be added or some of the devices may not be provided. Further, some devices may be replaced by other devices having similar functions. Further, some functions of the present example embodiment may be provided by another device via a network, or the functions of the present example embodiment may be implemented by being distributed among a plurality of devices. For example, the HDD 104 may be replaced by a solid state drive (SSD) using a semiconductor memory. The HDD 104 may be replaced by a cloud storage. Thus, the hardware configuration of the information processing device 1 can be appropriately changed.

Fig. 2 is a functional block diagram of the information processing device 1 according to the present example embodiment. The information processing device 1 includes an imaging control unit 111, a matching unit 112, a score acquisition unit 113, a determination unit 114, an output unit 115, and a storage unit 116. The score acquisition unit 113 may be more generally referred to as an acquisition unit.

The CPU 101 loads a program stored in the ROM 103, the HDD 104, or the like into the RAM 102 and executes the program to perform predetermined calculation processes. The CPU 101 controls each unit of the information processing device 1 such as the communication I/F 105 and the imaging device 2 based on the program. Thus, the CPU 101 realizes the functions of the imaging control unit 111, the matching unit 112, the score acquisition unit 113, the determination unit 114, the output unit 115, and the storage unit 116. Specific processes performed by each functional block will be described later.

Some or all of the functions of the functional blocks described in the information processing device 1 in Fig. 2 may be provided in an external device of the information processing device 1. That is, the above-described functions may be realized by the information processing device 1 or may be realized by cooperation with an external device.

Fig. 3 is a flowchart illustrating an outline of a process performed in the information processing device 1 according to the present example embodiment. In the present example, the biometric authentication system performs matching each time a matching target person visits, and monitors the matching state at predetermined time intervals. The process of Fig. 3 is repeatedly performed after the biometric authentication system starts operating until the operation ends.

In step S10, the information processing device 1 determines whether or not a matching target person is present in the imaging range of the imaging device 2 of the biometric authentication system. When it is determined that a matching target person is present (YES in step S10), the process proceeds to step S20. When it is determined that there is no matching target person (NO in step S10), the process proceeds to step S30. This determination can be performed, for example, based on whether or not a face of a person is present in the nearby image acquired by the imaging device 2.

In step S20, the information processing device 1 acquires a face image of a matching target person, and performs a matching process for matching a feature amount acquired from the face image and a feature amount of a registrant.

In step S30, the information processing device 1 determines whether a predetermined time has elapsed. When it is determined that the predetermined time has elapsed (YES in step S30), the process proceeds to step S40. When it is determined that the predetermined time has not elapsed (NO in step S30), the process proceeds to step S10. The start time of the predetermined time used for this determination may be, for example, the operation start time of the biometric authentication system, or the time at which the matching state monitoring process described later is performed last.

In step S40, the information processing device 1 performs a matching state monitoring process based on a result of a past matching process. The information processing device 1 transmits management information indicating a matching state to the administrator terminal 3 based on the result of the matching state monitoring process.

Fig. 4 is a flowchart illustrating a matching process performed in the information processing device 1 according to the present example embodiment. Fig. 4 illustrates the matching process in step S20 of Fig. 3 in more detail.

In step S201, the imaging control unit 111 controls the imaging device 2 to capture and acquire an image including the matching target person. The acquired image is stored in the storage unit 116. In the present example embodiment, since the feature of the face of the matching target person is extracted as the feature amount, it is sufficient that at least the face of the matching target person is included in this image. Hereinafter, this image is sometimes referred to as a face image. In the case of performing the authentication method using a part other than the face, the image may include at least a part used for extracting the feature amount.

In step S202, the matching unit 112 extracts feature amounts of the matching target person from feature points such as eyes and nose included in the face image acquired by the imaging device 2.

In step S203, the matching unit 112 matches the feature amount of the matching target person and the feature amount of each of the plurality of registrants stored in advance in the storage unit 116. Here, the plurality of registrants are people who should determine whether or not the registrant is the same person as the matching target person in the biometric authentication system of the present example embodiment. For example, when the biometric authentication system of the present example embodiment is used to determine whether or not a person can pass the entry/exit gate, a plurality of registrants may be people who are authorized to pass the entry/exit gate.

In this matching, the matching unit 112 calculates a matching score indicating a matching degree of the feature amount used for the matching for each of the plurality of registrants. The calculated matching score is stored in the storage unit 116 in association with the registrant. The definition of the value of the matching score may be appropriately set in accordance with an algorithm used for matching. In the following description, the value of the matching score is a number between 0 and 1, and the greater the value is, the higher the degree of matching between feature amounts is. Note that a set of matching scores acquired by matching each of a plurality of registrants is sometimes called a matching score group.

In step S204, the matching unit 112 calculates a rank of each matching score in the matching score group. It is assumed that the higher the value of the matching score, that is, the higher the degree of matching between feature amounts is, the higher the rank is. The calculated rank is stored in the storage unit 116 in association with the registrant.

In step S205, the matching unit 112 determines whether there is a registrant having a matching score in which the rank is first rank and the value of the matching score is equal to or greater than a predetermined threshold value in the matching score group. When such a matching score exists (YES in step S205), the process proceeds to step S206. When such a matching score does not exist (NO in step S205), the process proceeds to step S207. Since the matching score group always includes the matching score with the first rank, the above determination condition may be referred to as "whether or not the matching score with the first rank is greater than or equal to a threshold value".

In step S206, the matching unit 112 determines that the matching target person is the same person as the registrant corresponding to the matching score having the first rank. That is, the matching unit 112 determines that the matching target person is one of the plurality of registrants.

In step S207, the matching unit 112 determines that the matching target person is not the same person as any of the plurality of registrants. That is, the matching unit 112 determines that the matching target person is not a registrant.

Fig. 5 is a table illustrating an example of a matching result acquired by the information processing device 1 according to the present example embodiment and stored in the storage unit 116. The data illustrated in this table is virtual data created to explain a process of the present example embodiment.

Fig. 5 illustrates five "registrant" and "face image data", "feature amount", "matching date and time", "matching score", "rank", and "determination result" stored in association with each registrant in a table form. Fig. 5 illustrates three sets of matching results performed at three matching times (10:21, 10:23, and 10:26) on the same day. In the first matching (10:21), since the matching score of the registrant AAA is the greatest in the five matching score groups and is the first rank, it is determined that the registrant AAA is the same person as the matching target person. Since four registrants other than the registrant AAA cannot be the same person as the matching target person, the registrant is determined to be different person regardless of the matching score. In the present example, it is assumed that the matching score of the first rank exceeds the threshold value in all the matching.

Similarly, in the second matching (10:23), the registrant CCC with the first rank is determined to be the same person as the matching target person, and in the third matching (10:26), the registrant DDD with the first rank is determined to be the same person as the matching target person. That is, the example illustrated in Fig. 5 illustrates that the matching target person at 10:21 is AAA, the matching target person at 10:23 is CCC, and the matching target person at 10:26 is DDD.

Fig. 6 is a flowchart illustrating a matching state monitoring process performed in the information processing device 1 according to the present example embodiment. Fig. 6 illustrates the matching state monitoring process in step S40 of Fig. 3 in more detail.

In step S401, the score acquisition unit 113 reads out the matching score group acquired by past matching and the rank of each matching score from the storage unit 116 and acquires them.

In step S402, the determination unit 114 extracts a plurality of matching scores having the first rank, and generates a distribution of the matching scores having the first rank. In step S403, the determination unit 114 extracts a plurality of matching scores having the second rank, and generates a distribution of the matching scores having the second rank. Hereinafter, a distribution including a plurality of matching scores of the first rank may be referred to as a first distribution, and a distribution including a plurality of matching scores of the second rank may be referred to as a second distribution.

In step S404, the determination unit 114 analyzes a matching state in the matching unit 112 based on the first distribution and the second distribution, and determines degradation of the matching accuracy. Details of this process will be described later. When it is determined that the matching accuracy is degraded (YES in step S405), the process proceeds to step S406. When it is not determined that the matching accuracy is degraded (NO in step S405), step S406 is skipped, and the matching state monitoring process ends.

In step S406, the output unit 115 transmits the management information to the administrator terminal 3. Thus, the administrator can acquire the monitoring result of the matching state at an appropriate time. The management information typically includes information indicating that the matching accuracy of the biometric matching system is degraded. As a specific example of this transmission, a message that warns that the matching accuracy of the biometric matching system is degraded is transmitted to the destination of the administrator by e-mail so that the administrator can browse the management information on the administrator terminal 3. Since the management information is transmitted in the form of an e-mail or the like which can be browsed immediately by the administrator, the administrator can take action quickly to the biometric authentication system.

In the process of step S406, the management information transmitted to the administrator terminal 3 may include identification information (registrant number, registrant name, or the like) indicating a registrant whose rank is the first rank. Thus, the administrator can take appropriate measures while confirming the validity of the matching based on the actually acquired face image or the like. This identification information may be any information that can be associated with a registrant, for example, the number of the registrant, the name of the registrant, the face image file name of the registrant, and the feature amount file name of the registrant.

Fig. 7 is a table illustrating an example of a first distribution and a second distribution of matching scores acquired by the information processing device 1 according to the present example embodiment. The data illustrated in this table represents the data included in the first distribution and the second distribution acquired when the matching score is extracted from the data in Fig. 5. When only the matching score with the first rank is extracted from the many matching scores illustrated in Fig. 5, three matching scores of 0.91, 0.88, and 0.79 are acquired. Similarly, when only the matching scores having the second rank are extracted, three matching scores of 0.44, 0.36, and 0.49 are acquired. In the table of Fig. 7, these are arranged in the order of the matching date and time.

When the first distribution of the first matching score and the second distribution of the second matching score are compared, the value of the first distribution is greater as a whole. In addition, the values of the distributions vary. Here, the first distribution is a distribution of the matching score when it is determined that the matching target person is the same person as the registrant, and the second distribution is a distribution of the matching score when it is determined that the matching target person is different person from the registrant. Therefore, the matching state can be analyzed by collecting a large amount of data of the first distribution and the second distribution and examining the tendency of the center or the spread of the matching score in the form of a histogram or the like.

A method for analyzing the matching state from the first distribution and the second distribution in the determination unit 114 will be described in more detail. Fig. 8 is an example of a graph illustrating a relationship between a distribution of matching scores in biometric authentication and an erroneous determination. In Fig. 8, the "first distribution (first rank)" is a distribution acquired when a large number of matching scores are acquired when the matching score is the first rank, that is, when it is determined that the matching target person and the registrant are the same person (the matching target person is the identical registrant). The "second distribution (second rank)" is a distribution acquired when a large number of matching scores are acquired when the matching score is the second rank, that is, when it is determined that the matching target person and the registrant are not the same person (the matching target person and the registrant are different people).

The "threshold value" in Fig. 8 is a threshold value of a matching score for determining whether the person is the identical person or the different person in the matching. When the matching score is equal to or greater than the threshold value, it is determined that the person is the identical person, and when the matching score is smaller than the threshold value, it is determined that the person is the different person.

There may be overlapping portions in the two distributions. Therefore, even if the threshold value is appropriately set, an erroneous determination causes at least in the overlapping portion. There are two types of erroneous determination modes. A portion in which the matching score in the first distribution is smaller than the threshold value, that is, a portion illustrated as "false rejection" in Fig. 8 is a range in which an erroneous determination that the person is not the same person is caused although the person is actually the identical person. In the second distribution, a portion in which the matching score is equal to or greater than the threshold value, that is, a portion illustrated as "false acceptance" in Fig. 8 is a range in which an erroneous determination that the person is the same person is caused although the person is actually the different person.

The areas of the portions of "false rejection" and "false acceptance" correspond to the occurrence probabilities of these erroneous determinations. By changing the setting of the threshold value, it is possible to change the areas of "false rejection" and "false acceptance", so that it is possible to adjust the occurrence probability of erroneous determination to some extent. However, when there is an overlapping portion in the distribution of the "first distribution (first rank)" and the "second distribution (second rank)", the occurrence probabilities of the two types of erroneous determinations are trade-off, and both of them cannot be set to zero at the same time. The likelihood of erroneous determination depends on the size of the overlapping area of the two distributions. The size of the overlapping area of the two distributions is determined by the center of the matching score of the two distributions, the size of the spread, and the like.

Fig. 9A and Fig. 9B are examples of graphs illustrating the relationship between the variation in the distribution of the matching score and the occurrence probability of the erroneous determination. Fig. 9A is an example of a distribution of matching scores in an initial state immediately after the start of operation of the biometric authentication system. In the initial state, the biometric authentication system is adjusted in advance so that the overlapping area of the first distribution and the second distribution is reduced in order to sufficiently reduce the probability of occurrence of erroneous determination. Fig. 9B is an example of the distribution of the matching scores after the distributions of the first distribution and the second distribution change after the biometric authentication system operates. As the biometric authentication system operates, the occurrence probability of an erroneous determination may change due to various factors such as a variation in the number of registrants registered in the database and a variation in the usage environment.

For example, as illustrated in Fig. 9B, when the matching score of the first distribution becomes small and approaches the second distribution, the overlapping area of the two distributions becomes large, and the probability of occurrence of erroneous determination of "false rejection" and "false acceptance" increases. For this reason, in the operation of the biometric authentication system, it is desired to monitor a change in the occurrence probability of an erroneous determination due to a change in state. Since the occurrence probability of the false determination depends on the states of the first distribution and the second distribution, it is effective to acquire the first distribution and the second distribution when performing this monitoring.

Analysis of the matching state and determination of degradation of the matching accuracy in step S404 will be described in more detail. The method of analyzing the matching state may be any method as long as the matching state can be grasped from the first distribution and the second distribution. For example, since erroneous determination is likely to occur when the first distribution and the second distribution are close to each other, a method of quantifying the degree of proximity between the first distribution and the second distribution and determining that the matching accuracy is degraded when the first distribution and the second distribution are close to each other than a predetermined threshold value may be employed. In order to quantify the degree of proximity, for example, a method of statistically considering the entire distribution such as an average value, a median value, or a variance of the first distribution and the second distribution may be used, or an overlapping area of the first distribution and the second distribution may be used. Since the overlapping area is directly linked to the occurrence probability of the erroneous determination, it is effective for extracting the matching accuracy.

The method of analyzing the matching state and determining degradation of the matching accuracy may be a method of determining whether or not the matching accuracy is degraded based on a temporal change in at least one of the first distribution and the second distribution. When the matching accuracy is degraded, the feature may appear more significantly in the temporal change than the absolute values of the first distribution and the second distribution. Therefore, it may be better to determine the degradation of the matching accuracy based on the temporal change. As a specific example of the determination criterion, it may be determined whether or not the amount of change in distribution between the initial state and the time point when the monitoring of the matching state is performed is equal to or greater than a predetermined threshold value. The direction in which the distribution changes from the initial state may be included in the determination criterion. The relationship between the degradation factor of the matching accuracy and the change in the distribution will be described in more detail with respect to the method of setting the determination criteria.

Fig. 10 is a table illustrating the relationship between the cause of degradation of the matching accuracy and the tendency of the change in the matching score. The tendency of changes in the first distribution and the second distribution for each cause of degradation of the matching accuracy will be described with reference to the example illustrated in Fig. 10.

By additionally registering a registrant, when the number of registrants stored in the storage unit 116 increases, the probability that a registrant having a high matching score will appear in other than the identical person increases. Therefore, in this case, the matching score of the second distribution increases. By using an algorithm that determines that the matching accuracy is degraded when the second distribution changes from the initial state in the increasing direction by a predetermined threshold or more, degradation of the matching accuracy due to the degradation can be determined.

Further, when the distribution of the attributes of the registrants (age, gender, or the like) changes, it becomes difficult to acquire a high matching score even when the matching target person and the registrant are the same person under the matching condition corresponding to the attribute originally assumed. Therefore, in this case, the matching score of the first distribution decreases. For this determination, an algorithm that determines that the matching accuracy is degraded when the first distribution changes in the direction of decreasing from the initial state by a predetermined threshold value or more may be used. As a specific example of the change in the attribute distribution, there is a case where a large number of elderly people are registered in actual operation although the biometric matching system is initially intended for younger people.

In addition, many low-quality face images may be registered by changing the registration method of the face images. In this case, even when the matching target person and the registrant are the same person, it is difficult to acquire a high matching score. Further, in a low-quality face image, even when the matching target person and the registrant are not the same person, a high matching score may be accidentally acquired. Therefore, in this case, the matching score of the first distribution decreases, and the matching score of the second distribution increases. For this determination, an algorithm may be used in which the matching accuracy is determined to be degraded when the first distribution changes by a predetermined threshold value or more in the direction of decreasing from the initial state and the second distribution changes by a predetermined threshold value or more in the direction of increasing from the initial state. Examples of the low-quality face image include a face image captured by a low-quality imaging device such as a camera mounted on a mobile phone, and a face image in which the face is oblique. An example in which a high matching score is accidentally acquired is a case in which both the registered face and the face of the matching target person are oblique.

Further, when the face of the registrant changes over time after a long time has elapsed from the registration, even if the matching target person and the registrant are the same person, it becomes difficult to acquire a high matching score. Therefore, in this case, the matching score of the first distribution decreases. For this determination, an algorithm may be used that determines that the matching accuracy is degraded when the first distribution changes in the direction of decreasing from the initial state by a predetermined threshold value or more.

In addition, when the lighting environment of the place where the imaging device 2 is installed changes, the luminance of the face image deviates from the assumed luminance, so that it becomes difficult to acquire a high matching score both at the time of identical person matching and at the time of different person matching. Therefore, in this case, the matching score of the first distribution and the second distribution decreases. For this determination, an algorithm may be used that determines that the matching accuracy is degraded when both the first distribution and the second distribution change by a predetermined threshold value or more in the direction in which the first distribution and the second distribution decrease from the initial state.

As described above, the first distribution and the second distribution change in various modes according to the degradation factor of the matching accuracy. Therefore, degradation of the matching accuracy can be appropriately determined by inferring degradation factors that may occur in accordance with installation place of the biometric matching system, installation environment, and the like, and then using the above-described algorithm alone or in combination as appropriate.

In the example described in the present example embodiment, the matching scores included in the second distribution are only those of the second rank, but those of the third rank and below may be extracted as long as they are other than the first rank. Since the matching score of the third rank and below can be treated as a matching score when a different person is matched in the same manner as the second rank, more data can be extracted by including not only the second rank but also the third rank and below in the second distribution.

As described above, the information processing device 1 according to the present example embodiment can determine degradation of the matching accuracy based on the matching score whose rank is the first rank and the matching score whose rank is not the first rank in the matching score group. Then, the information processing device 1 outputs the management information according to the determination result, whereby the information processing device 1 can notify the administrator of the matching state. Accordingly, the administrator can grasp the matching state at an appropriate time, and when the matching accuracy is degraded or the like, the administrator can quickly take actions to the biometric authentication system. Further, since the information processing device 1 of the present example embodiment can monitor the matching state while operating the biometric matching system as usual, it is not necessary to separately perform matching accuracy inspection. As described above, according to the present example embodiment, the information processing device 1 capable of appropriately managing the matching state is provided.

### [Second Example Embodiment]

In the biometric authentication system of the present example embodiment, the contents of the matching state monitoring process are different from those of the first example embodiment, but the other portions are the same as those of the first example embodiment. Hereinafter, differences from the first example embodiment will be mainly described, and description of common portions will be omitted or simplified.

Fig. 11 is a flowchart illustrating a matching state monitoring process performed in the information processing device 1 according to the present example embodiment. Fig. 11 illustrates the matching state monitoring process in step S40 of Fig. 3 in more detail. Since the process from step S401 to step S405 is the same as that in the first example embodiment, the description thereof will be omitted.

In step S407, the determination unit 114 determines a degradation factor of the matching accuracy based on the first distribution and the second distribution. The degradation factor may be determined by, for example, investigating the correlation relationship between the degradation cause and the change in distribution as illustrated in Fig. 10 in advance, and determining the degradation factor from the tendency of the change in the first distribution and the second distribution. The degradation factor of the matching accuracy can be determined by constructing a rule-based determination algorithm that outputs the degradation factor by inputting the direction of change and the amount of change of the first distribution and the second distribution from the survey result. Alternatively, the degradation factor of the matching accuracy may be determined using a learned model generated by machine learning using the survey result as teacher data. If it is difficult to narrow down the degradation factor to one, a plurality of degradation factor candidates may be determined and presented.

In step S406, the output unit 115 transmits the management information to the administrator terminal 3. The management information includes information on the degradation of the matching accuracy of the biometric matching system and the degradation factor of the matching accuracy. A specific example of this transmission method may be to send a warning message indicating that the matching accuracy of the biometric matching system is degraded and a message indicating a candidate of an estimated degradation factor to the destination of the administrator by e-mail. As a result, the administrator can take action to the biometric authentication system quickly while utilizing the determined degradation factor.

According to the present example embodiment, in addition to the effect described in the first example embodiment, since the degradation factor can be acquired by the determination unit 114, the information processing device 1 capable of managing the matching accuracy more appropriately is provided.

The system described in the above example embodiment can also be configured as in the following third example embodiment.

### [Third Example Embodiment]

Fig. 12 is a functional block diagram of the information processing device 4 according to the third example embodiment. The information processing device 4 includes an acquisition unit 401, a determination unit 402, and an output unit 403. The acquisition unit 401 acquires a matching score group including a plurality of matching scores each indicating a matching degree between a first biological information and a second biological information acquired by matching the first biological information acquired from an image including at least a part of a matching target person and a plurality of the second biological information corresponding to a plurality of registrants. The determination unit 402 performs a determination based on a matching score in which rank is a first rank and a matching score in which rank is not a first rank in the matching score group. The output unit 403 outputs a management information based on a result of the determination.

According to the present example embodiment, the information processing device 4 capable of appropriately managing the matching accuracy is provided.

### [Modified Example embodiments]

The some non-limiting embodiments are not limited to the example embodiments described above, and may be suitably modified within the scope of the some non-limiting embodiments. For example, an example in which a part of the configuration of one example embodiment is added to another example embodiment or an example in which a part of the configuration of one example embodiment is replaced with a part of the configuration of another example embodiment is also an example embodiment of the some non-limiting embodiments.

The scope of each of the example embodiments also includes a processing method that stores, in a storage medium, a program that causes the configuration of each of the example embodiments to operate so as to implement the function of each of the example embodiments described above, reads the program stored in the storage medium as a code, and executes the program in a computer. That is, the scope of each of the example embodiments also includes a computer readable storage medium. Further, each of the example embodiments includes not only the storage medium in which the computer program described above is stored but also the computer program itself. Further, one or two or more components included in the example embodiments described above may be a circuit such as an application specific integrated circuit (ASIC), a field programmable gate array (FPGA), or the like configured to implement the function of each component.

As the storage medium, for example, a floppy (registered trademark) disk, a hard disk, an optical disk, a magneto-optical disk, a compact disk (CD)-ROM, a magnetic tape, a non-volatile memory card, or a ROM can be used. Further, the scope of each of the example embodiments includes an example that operates on operating system (OS) to perform a process in cooperation with another software or a function of an add-in board without being limited to an example that performs a process by an individual program stored in the storage medium.

Further, a service implemented by the function of each of the example embodiments described above may be provided to a user in a form of software as a service (SaaS) .

It should be noted that the above-described example embodiments are merely examples of embodying the some non-limiting embodiments, and the technical scope of the some non-limiting embodiments should not be limitedly interpreted by these. That is, the some non-limiting embodiments can be implemented in various forms without departing from the technical idea or the main features thereof.

The whole or part of the example embodiments disclosed above can be described as, but not limited to, the following supplementary notes.

### (Supplementary note 1)

An information processing device comprising:
an acquisition unit configured to acquire a matching score group including a plurality of matching scores each indicating a matching degree between a first biological information and a second biological information acquired by matching the first biological information acquired from an image including at least a part of a matching target person and a plurality of the second biological information corresponding to a plurality of registrants;
a determination unit configured to perform a determination based on a matching score in which a rank is a first rank and a matching score in which the rank is not a first rank in the matching score group; and
an output unit configured to output a management information based on a result of the determination.

### (Supplementary note 2)

The information processing device according to supplementary note 1, wherein the determination unit performs the determination based on a first distribution including a plurality of matching scores in which the rank is a first rank and a second distribution including a plurality of matching scores in which the rank is not a first rank.

### (Supplementary note 3)

The information processing device according to supplementary note 2, wherein the determination unit performs the determination based on a temporal change in at least one of the first distribution and the second distribution.

### (Supplementary note 4)

The information processing device according to supplementary note 3, wherein the output unit outputs the management information when it is determined that the first distribution has changed in a decreasing direction from an initial state by a predetermined threshold value or more.

### (Supplementary note 5)

The information processing device according to supplementary note 3, wherein the output unit outputs the management information when it is determined that the second distribution has changed in an increasing direction from an initial state by a predetermined threshold value or more.

### (Supplementary note 6)

The information processing device according to supplementary note 3, wherein the output unit outputs the management information when it is determined that the first distribution has changed in a decreasing direction from an initial state by a predetermined threshold value or more and the second distribution has changed in an increasing direction from an initial state by a predetermined threshold value or more.

### (Supplementary note 7)

The information processing device according to supplementary note 3, wherein the output unit outputs the management information when it is determined that both the first distribution and the second distribution have changed in a decreasing direction from an initial state by a predetermined threshold value or more.

### (Supplementary note 8)

The information processing device according to supplementary note 2, wherein the determination unit performs the determination based on a degree of proximity between the first distribution and the second distribution.

### (Supplementary note 9)

The information processing device according to supplementary note 8, wherein the determination unit performs the determination based on an overlapping area between the first distribution and the second distribution.

### (Supplementary note 10)

The information processing device according to any one of supplementary notes 1 to 9, wherein the management information includes an identification information indicating a registrant of which the rank is a first rank.

### (Supplementary note 11)

The information processing device according to any one of supplementary notes 1 to 10, wherein the management information includes an information indicating that a matching accuracy is degraded.

### (Supplementary note 12)

The information processing device according to supplementary note 11, wherein the management information includes an information on a degradation factor of the matching accuracy.

### (Supplementary note 13)

The information processing device according to supplementary note 12, wherein the determination unit further determines the degradation factor based on a matching score in which the rank is a first rank and a matching score in which the rank is not a first rank.

### (Supplementary note 14)

The information processing device according to any one of supplementary notes 1 to 13, wherein the output unit outputs the management information by transmitting a message to the administrator terminal to warn a degradation of the matching accuracy.

### (Supplementary note 15)

The information processing device according to any one of supplementary notes 1 to 14,
wherein the first biological information is a face image of the matching target person or a feature amount extracted from a face image of the matching target person, and
wherein the second biological information is a face image of the registrant or a feature amount extracted from a face image of the registrant.

### (Supplementary note 16)

An information processing method comprising:
acquiring a matching score group including a plurality of matching scores each indicating a matching degree between a first biological information and a second biological information acquired by matching the first biological information acquired from an image including at least a part of a matching target person and a plurality of the second biological information corresponding to a plurality of registrants;
performing a determination based on a matching score in which a rank is a first rank and a matching score in which the rank is not a first rank in the matching score group; and
outputting a management information based on a result of the determination.

### (Supplementary note 17)

A storage medium storing a program that causes a computer to perform:
acquiring a matching score group including a plurality of matching scores each indicating a matching degree between a first biological information and a second biological information acquired by matching the first biological information acquired from an image including at least a part of a matching target person and a plurality of the second biological information corresponding to a plurality of registrants;
performing a determination based on a matching score in which a rank is a first rank and a matching score in which the rank is not a first rank in the matching score group; and
outputting a management information based on a result of the determination.

### [Reference Signs List]

1, 4 information processing device
2 imaging device
3 administrator terminal
101 CPU
102 RAM
103 ROM
104 HDD
105 communication I/F
106 input device
107 output device
111 imaging control unit
112 matching unit
113 score acquisition unit
114, 402 determination unit
115, 403 output unit
116 storage unit
401 acquisition unit

## Claims

1. An information processing device comprising:
an acquisition unit configured to acquire a matching score group including a plurality of matching scores each indicating a matching degree between a first biological information and a second biological information acquired by matching the first biological information acquired from an image including at least a part of a matching target person and a plurality of the second biological information corresponding to a plurality of registrants;
a determination unit configured to perform a determination based on a matching score in which a rank is a first rank and a matching score in which the rank is not a first rank in the matching score group; and
an output unit configured to output a management information based on a result of the determination.

2. The information processing device according to claim 1, wherein the determination unit performs the determination based on a first distribution including a plurality of matching scores in which the rank is a first rank and a second distribution including a plurality of matching scores in which the rank is not a first rank.

3. The information processing device according to claim 2, wherein the determination unit performs the determination based on a temporal change in at least one of the first distribution and the second distribution.

4. The information processing device according to claim 3, wherein the output unit outputs the management information when it is determined that the first distribution has changed in a decreasing direction from an initial state by a predetermined threshold value or more.

5. The information processing device according to claim 3, wherein the output unit outputs the management information when it is determined that the second distribution has changed in an increasing direction from an initial state by a predetermined threshold value or more.

6. The information processing device according to claim 3, wherein the output unit outputs the management information when it is determined that the first distribution has changed in a decreasing direction from an initial state by a predetermined threshold value or more and the second distribution has changed in an increasing direction from an initial state by a predetermined threshold value or more.

7. The information processing device according to claim 3, wherein the output unit outputs the management information when it is determined that both the first distribution and the second distribution have changed in a decreasing direction from an initial state by a predetermined threshold value or more.

8. The information processing device according to claim 2, wherein the determination unit performs the determination based on a degree of proximity between the first distribution and the second distribution.

9. The information processing device according to claim 8, wherein the determination unit performs the determination based on an overlapping area between the first distribution and the second distribution.

10. The information processing device according to any one of claims 1 to 9, wherein the management information includes an identification information indicating a registrant of which the rank is a first rank.

11. The information processing device according to any one of claims 1 to 10, wherein the management information includes an information indicating that a matching accuracy is degraded.

12. The information processing device according to claim 11, wherein the management information includes an information on a degradation factor of the matching accuracy.

13. The information processing device according to claim 12, wherein the determination unit further determines the degradation factor based on a matching score in which the rank is a first rank and a matching score in which the rank is not a first rank.

14. The information processing device according to any one of claims 1 to 13, wherein the output unit outputs the management information by transmitting a message to the administrator terminal to warn a degradation of the matching accuracy.

15. The information processing device according to any one of claims 1 to 14,
wherein the first biological information is a face image of the matching target person or a feature amount extracted from a face image of the matching target person, and
wherein the second biological information is a face image of the registrant or a feature amount extracted from a face image of the registrant.

16. An information processing method comprising:
acquiring a matching score group including a plurality of matching scores each indicating a matching degree between a first biological information and a second biological information acquired by matching the first biological information acquired from an image including at least a part of a matching target person and a plurality of the second biological information corresponding to a plurality of registrants;
performing a determination based on a matching score in which a rank is a first rank and a matching score in which the rank is not a first rank in the matching score group; and
outputting a management information based on a result of the determination.

17. A storage medium storing a program that causes a computer to perform:
acquiring a matching score group including a plurality of matching scores each indicating a matching degree between a first biological information and a second biological information acquired by matching the first biological information acquired from an image including at least a part of a matching target person and a plurality of the second biological information corresponding to a plurality of registrants;
performing a determination based on a matching score in which a rank is a first rank and a matching score in which the rank is not a first rank in the matching score group; and
outputting a management information based on a result of the determination.
